# EUROPÄISCHE PATENTANMELDUNG

(11) **EP 0 757 945 A2**
(43) Veröffentlichungstag der Anmeldung: **12.02.1997**
(21) Anmeldenummer: 96112077.1
(22) Anmeldetag: 26.07.1996
(51) Int. Cl.: B60Q 1/00

(54) **Landwirtschaftliches Fahrzeug**

(30) Priorität: 09.08.1995 DE 19529206; 17.01.1996 DE 19601440
(71) Anmelder: SAME S.p.A., I-24047 Treviglio (Bergamo) (IT)
(72) Erfinder: Kramer, Peter, 53842 Troisdorf (DE)
(74) Vertreter: Nau, Walter, Dipl.-Ing.

(57) **Zusammenfassung**

1. Fahrzeug, insbesondere land- oder bauwirtschaftliches Fahrzeug.
2. Ausgehend von einem Fahrzeug, insbesondere einem land- oder bauwirtschaftlichen Fahrzeug (Ackerschlepper), das zumindest im Frontbereich Beleuchtungseinrichtungen sowie eine Abdeckung, insbesondere eine Motorhaube, aufweist, wird die Aufgabe, ein Fahrzeug derart auszugestalten, daß dessen Funktionalität, insbesondere bei Arbeiten im Dunkeln erhöht und die Arbeitssicherheit verbessert wird, dadurch gelöst, daß die Beleuchtungseinrichtungen zumindest in seitlichen Bereichen des Frontbereiches angeordnet sind und die Innenseiten der Vorderräder sowie deren Fahrbereich beleuchten.

## Beschreibung

Die Erfindung betrifft ein Fahrzeug, insbesondere ein land- oder bauwirtschaftliches Fahrzeug, mit einem Fahrzeug-Endbereich, in dem lenkbare Räder angeordnet sind, wobei zwischen dem Endbereich und den Rädern, quer zur Fahrzeuglängsachse, Freiräume vorgesehen sind.

Ein solches Fahrzeug ist beispielsweise aus dem Prospekt der Firma DEUTZ-FAHR bekannt, wobei auf dem Deckblatt des Prospekts zu der Baureihe AGROXTRA (3.57 - 6.17) zu erkennen ist, daß Beleuchtungseinrichtungen im Frontbereich sowie an der A-Säule und am Dachrand der Kabine angebracht sind. Diese sollen das Arbeiten auch bei schlechter Sicht oder im Dunkeln ermöglichen.

Derart angeordnete Beleuchtungseinrichtungen haben den Nachteil, daß sie aufgrund ihrer Anbaustelle und ihrer insbesondere in Fahrtrichtung nach vorne gerichteten Lichtkegel die Vorderräder und deren Fahrbereich sowie evtl. im Frontbereich angebaute Anbaugeräte und deren Arbeitsbereich nicht ausreichend beleuchten können.

Der Erfindung liegt deshalb die Aufgabe zugrunde, ein Fahrzeug, insbesondere ein land- oder bauwirtschaftliches Fahrzeug, derart auszugestalten, daß dessen Einsatz auch mit Anbaugeräten selbst bei Dunkelheit sicher und effektiv von statten geht.

Die Aufgabe wird dadurch gelöst, daß im Endbereich des Fahrzeuges Beleuchtungseinrichtungen angeordnet sind, durch die die Innenseite der Räder und/oder deren Fahrbereiche und/oder Anbaugeräte und deren Arbeitsbereich beleuchtbar sind. Auf diese Weise kann der Fahrer die Räder und deren Fahrbereich genau verfolgen und dabei, insbesondere bei Feldarbeit entlang von Furchen oder sonstigen Saatbettmarkierungen, einfach fahren. Er kann z.B. beim Pflügen nach dem Wenden des Fahrzeugs das entsprechende Rad wieder sicher in die letzte Furche lenken. Auch beim Einsatz von Anbaugeräten ist die Beherrschung der Lenkung des Fahrzeugs wichtig. Hinzu kommt noch das erfindungsgemäß verbesserte Erkennen der Anbauberäte und deren Arbeitsbereich, wodurch die gezielte und sichere Handhabung derselben auch bei Nacht möglich ist.

Bei der Definition als Erfindungsgegenstandes in der Aufgabe und Lösung wurde bewußt nicht der Frontbereich des Fahrzeuges und die Vorderräder angesprochen, sondern der Endbereich des Fahrzeuges definiert, da je nach Einsatz dieser Fahrzeuge, z.B. in der Bauwirtschaft, die Fahrrichtung auch umgekehrt sein kann und dann die Definition "Front" nicht zutreffend ist, wobei trotzdem der Gegenstand der Erfindung zur Anwendung kommen kann. Eine entsprechende Einschränkung wäre daher nicht notwendig und sinnvoll und ist nicht gewollt.

Durch eine vorteilhafte Weiterbildung der Erfindung wird erreicht, daß die Beleuchtungseinrichtungen in der Frontwand und im frontnahen Bereich der Seitenwände angeordnet sind. Die Beleuchtungseinrichtungen in der Frontwand beleuchten in bekannter Weise den Fahrweg und Teile der Frontanbaugeräte und deren Arbeitsbereich. Die Beleuchtungseinrichtungen im frontnahen Bereich der Seitenwände beleuchten in erster Linie die Innenseiten der Vorderräder sowie den Fahrbereich vor und hinter diesen. Außerdem beleuchten sie in Ergänzung der in der Frontseite angeordneten Beleuchungseinrichtungen die Frontanbaugeräte und deren Arbeitsbereich, insbesondere deren seitliche Randbereiche, in denen die Spur liegt, an die angeschlossen werden soll.

Eine vorteilhafte Ausbildung der Erfindung besteht darin, daß die Beleuchungseinrichtungen als getrennte Frontscheinwerfer und Seitenscheinwerfer ausgebildet sind. Dadurch kann die erfindungsgemäße Lösung durch Hinzufügen von Seitenscheinwerfern zu den serienmäßigen Frontscheinwerfern kostengünstig, ggfs. durch Nachrüsten erreicht werden.

Von Vorteil ist eine Weiterbildung der Erfindung, bei der die Beleuchtungseinrichtungen als Kombination aus Frontscheinwerfer und Seitenscheinwerfer ausgebildet sind. Diese Lösung ist gestalterisch besonders interessant. Sie bietet auch den Vorteil einfacher Montage.

Durch eine vorteilhafte Ausbildung der Erfindung wird erreicht, daß die Seitenscheinwerfer als Breitstrahler ausgebildet sind. Auf diese Weise wird neben den Innenseiten der Vorderräder auch der Fahrbereich ausgeleuchtet. Dadurch ist zielsicheres Lenken möglich. Die Seitenscheinwerfer können in an sich bekannter Weise um eine im wesentlichen senkrechte Achse schwenkbar gelagert sein. Das Verschwenken kann entweder willkürlich, z.B. durch den Fahrer erfolgen und dabei auch gegensinnig zur Einengung oder Verbreiterung des Ausleuchtbereichs möglich sein, oder aber synchron zur Lenkbewegung der Vorderräder.

Eine vorteilhafte Weiterbildung der Erfindung besteht darin, daß ein Entriegelungsmechanismus der Motorhaube in Wirkverbindung mit einem Firmenlogo steht oder von diesem verdeckt wird. Dies hat den Vorteil, daß der Bauteile- und Montageaufwand verringert wird, da Entriegelungsmechanismus und Firmenlogo eine Baueinheit bilden.

Von Vorteil ist eine Ausbildung der Erfindung, bei der der Entriegelungsmchanismus zwischen den Frontscheinwerfern angeordent ist. Dort ist eine markante Stelle zur Anbringung des Firmenlogos und eine sinnvolle Stelle für den Entriegelungsmechanismus.

Eine Weiterbildung der Erfindung bietet den Vorteil, daß der Entriegelungsmechanismus, die Frontscheinwerfer und die Seitenscheinwerfer als vormontierte Einheit ausgebildet sind. Auf diese Weise werden Montagezeit und Montagekosten am Fließband eingespart.

Es kann vorgesehen werden, daß für den Entriegelungsmechanismus im Firmenlogo lediglich eine Aussparung vorgesehen ist, durch die das eigentliche Bedienelement durchgeführt wird.

Die erfindungsgemäße Ausgestaltung bietet sich insbesondere für die Anwendung im Frontbereich von Fahrzeugen an, wobei auch eine Anwendung im Heckbereich denkbar ist, was beispielsweise beim Einsatz von überbreiten Anbaugeräten oder auch bei Rückwärtsfahrten von Vorteil ist. Ein weiterer Vorteil der erfindungsgemäßen Ausgestaltung besteht darin, daß auf zusätzliche Scheinwerfer im Kabinenbereich verzichtet werden kann, wenn es um die Ausleuchtung des Arbeitsraumes geht.

Weitere Merkmale der Erfindung ergeben sich aus der folgenden Beschreibung und der Zeichnung, in der ein Ausführungsbeispiel der Erfindung schematisch dargestellt ist.

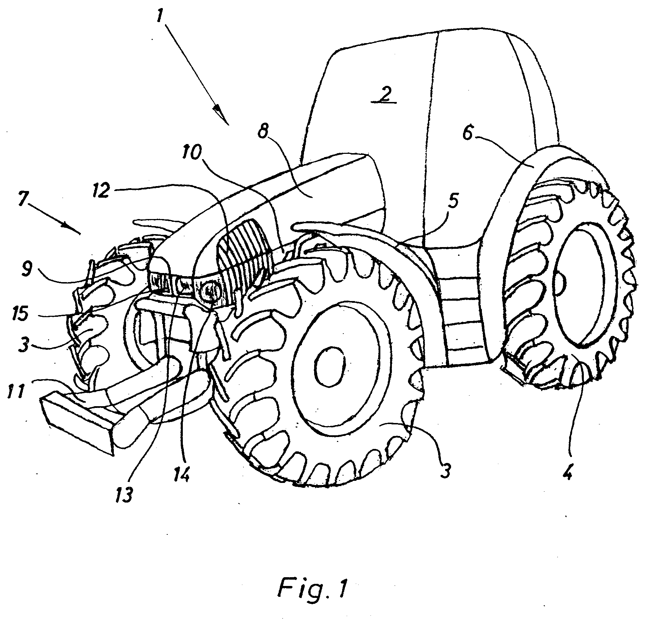

Die Figur 1 zeigt einen Ackerschlepper 1, mit einer Fahrerkabine 2, zwei lenkbaren Vorderrädern 3 sowie zwei angetriebenen Hinterrädern 4. Die Vorderräder 3 weisen Teilradabdeckungen 5, die Hinterräder 4 hintere Radabdeckungen 6 auf.

Im Frontbereich 7 des Ackerschleppers 1 zwischen den Vorderrädern 3 ist eine Motorhaube 8 angeordnet, die auf einer Frontwand 9 und zwei Seitenwänden 10 aufliegt.

Im Frontbereich 7 sind in üblicherweise die Vorderachse mit Vorderachslagerbock, eine Kühlanlage und der Motor angeordnet. Am Vorderachslagerbock ist ein Kraftheber 11 zur Aufnahme von Frontanbaugeräten befestigt.

Bei den Seitenwänden 10 kann es sich um ein Chassis, ein Fahrgestell oder um Abdeckungen handeln, die am Fahrgestell oder Chassis angebracht sind.

In der Frontwand 9 sind zwei Frontscheinwerfer 13, in dem vorderen Bereich der Seitenwände 10 zwei Seitenscheinwerfer 14 angebracht. Die Streuscheiben der Seitenscheinwerfer 14 sind der Kontur der Motorhaube 8 folgend auch als abgerundeter Übergang der Frontwand 9 in die Seitenwände 10 ausgebildet. Frontscheinwerfer 13 und Seitenscheinwerfer 14 passen sich der Kontur von Frontwand 9, Seitenwänden 10 und Motorhaube 8 an.

Grundsätzlich können die Seitenscheinwerfer 14 gegenüber den Frontscheinwerfern 13 höher oder tiefer oder weiter zurück angeordnet sein. Sie können auch an der Motorhaube 8 befestigt sein. Sie können auch, wie bereits erwähnt, schwenkbar sein.

Aus jeder der angeführten Lagen der Seitenscheinwerfer 14, die als Breitstrahler ausgebildet sind, werden die Innenseite der Vorderräder 3 und deren Fahrbereich ausgeleuchtet. Damit ist ein zielgenaues Lenken des Ackerschleppers 1 in der Dunkelheit ermöglicht. Außerdem werden Frontanbaugeräte und deren Arbeitsbereich durch die Frontscheinwerfer 13 und die Seitenscheinwerfer 14 beleuchtet und sind so besser zu handhaben.

Weiterhin ist in der Frontwand 9, zwischen den beiden Frontscheinwerfern 13, ein Entriegelungsmechanismus 15 zum Öffnen der Motorhaube 8 angeordnet, wobei der Entriegelungsmechanismus 15 die Form eines Firmenlogos aufweist bzw. mit einem Firmenlogo abgedeckt ist und in einfacher Weise hineingedrückt (bzw. hinausgezogen oder gedreht) werden muß, um die Motorhaube 8 zu öffnen.

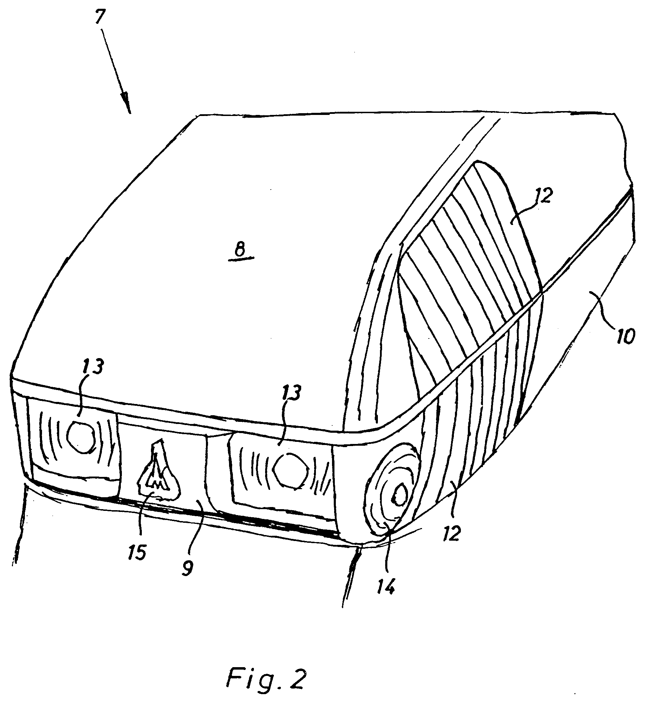

Zur Verdeutlichung der Anordnung der Frontscheinwerfer 13 und der Seitenscheinwerfer 14 zeigt Figur 2 eine vergrößerte Darstellung des Frontbereichs 7. Dieser umfaßt die Motorhaube 8, die auf der Frontwand 9 und der Seitenwand 10 aufliegt. In der Frontwand 9 sind die Frontscheinwerfer 13, in der Seitenwand 10 die Seitenscheinwerfer 14 angeordnet. Zwischen den Frontscheinwerfern 13 befindet sich der als Firmenlogo ausgebildete Entriegelungsmechanismus 15. In der Motorhaube 8 und in den Seitenwänden 10 sind Lüftungsöffnungen 12 vorgesehen.

### Bezugszeichenliste

- 1: Ackerschlepper
- 2: Fahrerkabine
- 3: Vorderrad
- 4: Hinterrad
- 5: Teilradabdeckung
- 6: Hintere Radabdeckung
- 7: Frontbereich
- 8: Motorhaube
- 9: Frontwand
- 10: Seitenwand
- 11: Kraftheber
- 12: Lüftungsöffnung
- 13: Frontscheinwerfer
- 14: Seitenscheinwerfer
- 15: Entriegelungsmechanismus

## Patentansprüche

1. Fahrzeug, insbesondere land- oder bauwirtschaftliches Fahrzeug, mit einem Fahrzeug-Endbereich, in dem lenkbare Räder angeordnet sind, wobei zwischen dem Endbereich und den Rädern, quer zur Fahrzeuglängsachse, Freiräume vorgesehen sind,
*dadurch gekennzeichnet*, daß im Endbereich (7) des Fahrzeuges Beleuchtungseinrichtungen angeordnet sind, durch die die Innenseite der Räder (3) und/oder deren Fahrbereiche und/oder Anbaugeräte und deren Arbeitsbereich beleuchtbar sind.

2. Fahrzeug nach Anspruch 1,
*dadurch gekennzeichnet*, daß die Beleuchtungseinrichtungen in der Endwand (9) und im endnahen Bereich der Seitenwände (10) angeordnet sind.

3. Fahrzeug nach einem der vorhergehenden Ansprüche,
*dadurch gekennzeichnet*, daß die Beleuchtungseinrichtungen als Frontscheinwerfer (13) und Seitenschweinwerfer 14 ausgebildet sind.

4. Fahrzeug nach einem der vorhergehenden Ansprüche,
*dadurch gekennzeichnet*, daß die Beleuchtungseinrichtungen als Kombination aus Frontscheinwerfer (13) und Seitenscheinwerfer (14) ausgebildet sind.

5. Fahrzeug nach einem der vorhergehenden Ansprüche,
*dadurch gekennzeichnet*, daß zumindest die Seitenscheinwerfer (14) als Breitstahler ausgebildet sind.

6. Fahrzeug nach einem der vorhergehenden Ansprüche,
*dadurch gekennzeichnet*, daß ein Entriegelungsmechanismus (15) der Motorhaube (8) in Wirkverbindung mit einem Firmenlogo steht oder von diesem verdeckt wird.

7. Fahrzeug nach einem der vorhergehenden Ansprüche,
*dadurch gekennzeichnet*, daß der Entriegelungsmechanismus (15) zwischen den Frontscheinwerfern (13) angeordnet ist.

8. Fahrzeug nach einem der vorhergehenden Ansprüche,
*dadurch gekennzeichnet*, daß der Entriegelungsmechanismus (15), die Frontscheinwerfer (13) und die Seitenscheinwerfer (14) als vormontierte Einheit ausgebildet sind.
